# EUROPÄISCHE PATENTSCHRIFT

(11) **EP 2 547 634 B1**
(45) Veröffentlichungstag und Bekanntmachung des Hinweises auf die Patenterteilung: **22.08.2018**
(21) Anmeldenummer: 11708192.7
(22) Anmeldetag: 02.03.2011
(51) Int. Cl.: C04B 26/14, C04B 28/02, C04B 28/04, C04B 40/06

(54) **VERWENDUNG EINES EPOXIDBASIERTEN BEFESTIGUNGSMÖRTELS MIT SILANZUSÄTZEN**
USE OF AN EPOXIDE-BASED FIXING MORTAR HAVING SILANE ADDITIONS
UTILISATION D'UN MORTIER DE SCELLEMENT À BASE D'ÉPOXY CONTENANT DES ADDITIFS SILANE

(30) Priorität: 16.03.2010 DE 102010015981
(43) Veröffentlichungstag der Anmeldung: 23.01.2013
(73) Patentinhaber: fischerwerke GmbH & Co. KG, 72178 Waldachtal (DE)
(72) Erfinder: GRÜN, Jürgen, 79268 Bötzingen (DE); VOGEL, Martin, 79286 Glottertal (DE); SCHMIDT, Clemens, 79211 Denzlingen (DE); SCHLENK, Christian, 79211 Denzlingen (DE)
(86) Internationale Anmeldenummer: PCT/EP2011/001016
(87) Internationale Veröffentlichungsnummer: WO 2011/113533

(56) Entgegenhaltungen:
- WO-A2-2010/020401
- DE-A1-102006 054 471
- US-A- 5 229 438
- US-A1- 2006 135 656
- ROULIN-MOLONEY ET AL: "Parameters Determining the Strength and Toughness of Particulate-Filled Epoxy Resins", POLYM. COMPOSITES, Bd. 8, Nr. 5, Oktober 1987 (1987-10), Seiten 314-323, XP002650368,
- TARASZKIEWICZ C ET AL: "FABRICATION OF FRICTION INSERTS FOR INCREASING LOAD CAPACITY ESPECIALLY FOR FRICTION COUPLINGS WITH HIGH-STRENGTH BOLTS", CHEMICAL ABSTRACTS, CHEMICAL ABSTRACTS SERVICE (C A S), US, Bd. 110, Nr. 2, 1. Januar 1989 (1989-01-01), Seite 269, XP000019519, ISSN: 0009-2258

## Beschreibung

Die Erfindung betrifft die Verwendung eines Befestigungsmörtelsystems wie unten und in den Ansprüchen definiert, zum Einmörteln von Verankerungsmitteln in Löcher oder Spalten, bei dem das Befestigungsmörtelsystem und ein Verankerungsmittel in ein Loch oder einen Spalt eingebracht werden und das Befestigungsmörtelsystem zum Aushärten gebracht wird.
Es sind eine Reihe von (z.B. Injektions-)Befestigungsmörtelsystemen auf Basis verschiedenster polymerbildender Komponenten bekannt, die, mal als Ein-, mal als Zwei- oder Mehrkomponentensysteme ausgebildet, dem Einmörteln von Verankerungsmitteln, wie Bolzen oder dergleichen, in Löchern, wie Bohrlöchern, oder Spalten, jeweils in festen Untergründen wie z.B. Mauerwerk oder Beton, dienen. An den Verankerungsmitteln können dann weitere Bauteile befestigt werden. Das Einmörteln der Verankerungsmittel beruht dabei zum einen auf Klebeeffekten im Sinne eines Stoffschlusses zwischen dem Kunstmörtel und einem Verankerungselement und/oder der benetzten Fläche des Loches oder Spaltes, zum anderen auf Formschluss, wie beispielsweise Hinterschneidungen durch Umgeben mittels des Kunstmörtels von vorspringenden oder einbuchtenden Abschnitten des Verankerungselements und/oder des Lochs oder Spaltes.
Beispielsweise betrifft die DE 10 2006 054 471 A1 ein Mehrkomponenten-Kunstharzsystem sowie dessen Verwendung von Befestigungselementen. Das Mehrkomponenten-Kunstharzsystem beinhaltet in mindestens einer seiner Komponenten ein oder mehrere feinverteilte Gase.
Ein Beispiel für besonders gut geeignete Systeme sind solche auf der Basis von Epoxiden, wie insbesondere Glycidylverbindungen, und geeigneten Härtern.
FIS EM 390 S® (fischerwerke GmbH & Co. KG, Waldachtal, Deutschland) ist ein sehr erfolgreiches, auf dem Markt etabliertes Beispiel für ein zweikomponentiges Injektionsmörtelsystem zum Einmörteln von Verankerungselementen auf der Basis eines solchen Epoxyharzes in Komponente A und von Aminen als einem solchen Härter in Komponente B, daneben jeweils weiteren Bestandteilen in jeder Komponente.
Derartige Injektionsmörtelsysteme zeigen sehr gute Eigenschaften zur Befestigung auch in feuchten und schmutzigen Löchern, doch erhöhen insbesondere neue Vorschriften die Anforderungen auch unter Bedingungen relativ großer Nässe und Restverschmutzung, wie beispielsweise analog in der Leitlinie von der European Organisation for Technical Approvals (EOTA) (2001): ETAG N° 001 Ausgabe November 2006, Leitlinie für die europäische technische Zulassung für Metalldübel zur Verankerung im Beton, Teil 5: Verbunddübel, Februar 2008, unter 5.1.2.1 (b) beschriebenen Bedingungen: Dort werden Versuche mit enger Abstützung im ungerissenen Beton C 20/25 beschrieben, unter Verwendung u.a. elektrischer Hammerbohrmaschinen. Der Einfluss der Bohrloch-Reinigungstechnik im feuchten Untergrund wird hierbei (für die nachfolgend beschriebene Erfindung) beispielsweise wie folgt geprüft, wobei der Beton im Bereich der Verankerung mit Wasser gesättigt sein muss, wenn das Loch gebohrt, gereinigt und das Verankerungselement eingesetzt wird:
1. Ein Loch mit einem Durchmesser von etwa 0.5 x d₀ (d₀ = zu prüfender Bohrlochdurchmesser) wird mit der zu prüfenden Verankerungstiefe im Betonuntergrund gebohrt.
2. Das Loch wird mit Wasser gefüllt und bleibt 8 Tage lang gefüllt, bis Wasser in einer Entfernung von 1,5 d bis 2 d von der Bohrlochachse aus in den Beton eingedrungen ist.
3. Das Wasser wird aus dem Bohrloch entfernt.
4. Das endgültige Loch wird mit dem zu prüfenden Durchmesser d₀ aufgebohrt.

Dann wird das Bohrloch mit der vom Hersteller gelieferten Handpumpe und Bürste gereinigt, wobei folgendes Vorgehen gewählt wird: 1 x ausblasen mit dem Handausbläser / 1x Ausbürsten mit der Handbürste / 1 x ausblasen mit dem Handausbläser. Anschließend werden (beispielsweise im Versuch in den Beispielen für die nachfolgende Erfindung mittels einer 2-Komponenten-Kartusche mit Statikmischer) der Befestigungsmörtel und ein Verankerungselement M12 eingebracht.

Nach der vorgeschriebenen, temperaturabhängigen Mindestaushärtzeit werden dann Adhäsionsversagensversuche mit enger Abstützung, wie Sie in der europäische technischen Zulassung für Metalldübel zur Verankerung im Beton, Teil 5: Verbunddübel Ausgabe Februar 2008 unter 5.0 Bild 2 ausgeführt sind, durchgeführt, um die Adhäsionsversagenskraft der eingemörtelten Verankerungselemente zu ermitteln, beispielsweise im Rahmen der nachfolgenden Exemplifizierung oder für die allgemein unten beschriebene Erfindung.

Die bekannten Reaktionssysteme auf Epoxidbasis zeigen hierbei bereits sehr gute Adhäsionsversagenslasten, doch stellen die neuen Testsysteme und Verfahren weitere Herausforderungen, so dass eine Aufgabe darin besteht, auch unter diesen - für reale Verhältnisse schon recht ungewöhnlichen - Bedingungen noch bessere Eigenschaften, wie insbesondere weiter erhöhte Adhäsionsversagenslasten, zu erzielen.

Überraschend wurde nun gefunden, dass der Zusatz bestimmter Silane, die beispielsweise zur Teilnahme an der Polymerisierung mit einem Kunstharz auf Basis von Reaktivharzen auf Epoxidbasis befähigte reaktive Gruppen aufweisen oder nicht und in jedem Falle Si-gebundene hydrolysierbare Gruppen aufweisen, derartige bekannte Epoxidharze vorteilhaft beeinflusst, insbesondere höhere Adhäsionsversagenslasten ermöglicht.
Die Erfindung betrifft daher in einer ersten Verkörperung die Verwendung eines Befestigungsmörtelsystems zum Einmörteln von Verankerungsmitteln in Löcher oder Spalten, bei dem das Befestigungsmörtelsystem und ein Verankerungsmittel in ein Loch oder einen Spalt eingebracht werden und das Befestigungsmörtelsystem zum Aushärten gebracht wird, dadurch gekennzeichnet, dass als Befestigungsmörtelsystem eines auf der Basis von ein oder mehreren härtenden (in der vorliegenden Offenbarung gleichbedeutend mit härtbar verwendet) Reaktivharzen auf Epoxidbasis verwendet wird, welches ein oder mehrere Silane, die zur Teilnahme an der Polymerisierung mit einem Kunstharz auf Basis des oder der härtenden Reaktiv-Kunstharze auf Epoxidbasis befähigte reaktive Gruppen aufweisen oder nicht (d.h. keine solchen reaktiven Gruppen aufweisen) und in jedem Falle Si-gebundene hydrolysierbare Gruppen aufweisen, beinhaltet, wobei "auf der Basis" bedeutet, dass die erfindungsgemäß verwendeten Mörtelsysteme neben den genannten Kompo¬nenten auch weitere Inhaltsstoffe beinhalten können In einer weiteren Verkörperung (= Ausführungsform) betrifft die Erfindung die Verwendung eines Befestigungsmörtelsystems zum Einmörteln von Verankerungsmitteln, wobei das Befestigungsmörtelsystem auf der Basis von härtenden Reaktiv-Kunstharzen auf Epoxidbasis beruht und in einer oder mehreren Komponenten (bereits vor dem Beginn der Härtungsreaktion) neben dem oder den härtbaren Reaktivharzen auf Epoxidbasis und ein oder mehreren entsprechenden Härtern, z.B. auf der Basis von (Poly-)Aminen und/oder (Poly-)Thiolen ein oder mehrere keine oder mindestens eine Amino-, sek. Amino-, Mercapto-, Epoxy-, Isocyanato-, Alkenyl-, (Meth)acryloyl-, Anhydrido- und/oder (insbesondere) Epoxy-Gruppe, und zugleich mindestens eine Si-gebundene hydrolysierbare Gruppe beinhaltende Silane beinhaltet, daneben weitere übliche Zusätze, zum in Löcher oder Spalten in Substraten, wie Mauerwerk, Beton oder dergleichen, insbesondere in gerissenen Substraten, wie in einer besonderen Ausführungsform der Erfindung gerissenem Beton.
Auch entsprechende Verfahren und Methoden zum Einmörteln von Verankerungselementen und Löchern oder Spalten, bei denen ein Befestigungsmörtelsystem zum Einmörteln von Verankerungsmitteln verwendet wird, wobei das erfindungsgemäß verwendete Befestigungsmörtelsystem auf der Basis von härtenden Reaktiv-Kunstharzen auf Epoxidbasis beruht und in einer oder vorzugsweise mehreren Komponenten (bereits vor dem Beginn der Härtungsreaktion) neben dem oder den härtenden Reaktivharzen auf Epoxidbasis und ein oder mehreren entsprechenden Härtern, z.B. auf der Basis von (Poly-)Aminen und/oder (Poly-)Thiolen ein oder mehrere keine oder mindestens eine Amino-, sek. Amino-, Mercapto-, Isocyanato-, Alkenyl-, (Meth)acryloyl-, Anhydrido- und/oder (insbesondere) Epoxy-Gruppe, beinhaltende, und zugleich mindestens eine Si-gebundene hydrolysierbare Gruppe beinhaltende Silane beinhaltet, daneben weitere übliche Zusätze, wobei das erfindungsgemäß verwendete Befestigungsmörtelsystem und ein Verankerungsmittel nacheinander, insbesondere zuerst das erfindungsgemäß verwendete Befestigungsmörtelsystem, dann das Verankerungsmittel, oder (mindestens im wesentlichen) gleichzeitig in ein Loch oder einen Spalt in einem Substrat (insbesondere einem gerissenen Substrat, wie in einer besonderen Ausführungsform der Erfindung in gerissenem Beton) eingebracht werden, bilden eine Ausführungsform der Erfindung.

Möglicherweise bewirken die Silanzusätze, ohne durch diesen Erklärungsversuch abschließend gebunden sein zu wollen, einen besseren Kontakt zur benetzten Substratoberfläche im Loch oder Spalt, sei es im Form- und/oder im Stoffschluss.

Erstaunlich ist, dass insbesondere auch hohe Anteile vom System nicht nur gut toleriert werden, sondern sogar zu besonders effektiven Injektions-Kunstmörtelsystemen führen können. Offenbar ist auch eine verbesserte interne Kohäsion der (beim Einmörteln von Verankerungssystemen eher dickschichtigen) resultierenden ausgehärteten Kunstmörtel gegeben, die ebenfalls zu den hohen Werten für Adhäsionsversagen beitragen dürfte. Dies ist ein besonders überraschender Aspekt der vorliegenden Erfindung.

Ein weiterer positiver Effekt kann sich aus der sehr niedrigen Viskosität vieler Silane ergeben. Bei Verwendung dieser Silane in Injektionsmörtelsystem auf Epoxidbasis kann der Gehalt an anderen viskositätsreduzierenden Bestandteilen, wie z.B. Reaktivverdünner auf Basis aliphatischer Glycidylether, welche die Leistungsfähigkeit zumeist negativ beeinflussen, damit stark verringert oder sogar ganz vermieden werden werden. So können leistungsfähigere Systeme formuliert werden. In Tabelle 1 sind einige Beispiele für Viskositäten (Herstellerangaben, ermittelt zumeist mit einem Brookfield-Viskosimeter) von Silanen und Reaktivverdünnern aufgelistet.

**Tabelle 1: Vergleich der Viskositäten von Silanen und Glycidylethern.**

| Silan/Reaktivverdünner | Viskosität [mPa·s] bei 20 °C |
|---|---|
| Glycidyloxypropyltrimethoxysilan | 3,7 |
| Tetraethoxysilan | 0,75 |
| Aminopropyltriethoxysilan | 2 |
| Trimethylolpropantriglycidylether | 120-180 (bei 25 °C) |
| Hexandioldiglycidylether | 14-20 (bei 25 °C) |

Vorzugsweise liegt in allen Ausführungsformen der Erfindung die Viskosität der Silane bei bei 10 Pa ∗ s oder niedriger, wie bei 1 Pa ∗ s oder niedriger. Ganz besonders bevorzugt sind extrem niedrigviskose und niedermolekulare Silane mit Viskositäten kleiner als 100 mPa·s, insbesondere kleiner als 10 mPa·s.

Viskositäten werden, soweit nicht anders angegeben, nach DIN EN ISO 2555 mit einem Brookfield DV-III+-Viskosimeter mit Spindel 3 bei 10 Umdrehungen/Minute (U/min) bei 23 °C gemessen und in Pa·s (nachfolgend auch als Pa ∗ s oder Pas wiedergegeben) angegeben.

Überraschenderweise zeigen sich auch besonders gute Eigenschaften der erfindungsgemäß verwendeten Befestigungsmörtelsysteme hinsichtlich der Leistungsfähigkeit in der Zugzone, also im gerissenen Beton, unter Verwendung von normalen Gewindestangen. Auch andere mechanische Eigenschaften können positiv beeinflusst werden, wie beispielsweise die Maximalbruchdehnung und das Zugmodul.

Bei den ausgehärteten Massen handelt es sich so bevorzugt um hochfeste, wenig flexible Festkörper mit einem Zugmodul > 0,5 GPa, bevorzugt > 1 GPa oder > 2 GPa, einer Zugfestigkeit von > 1 MPa, bevorzugt > 5 MPa, insbesondere > 8 MPa und einer Bruchdehnung < 10 %, bevorzugt < 5 %, insbesondere < 2 % oder < 1 %(alle drei Größen gemessen nach DIN EN ISO 527) und einer Druckfestigkeit von > 5 MPa, bevorzugt > 10 MPa, insbesondere > 50 MPa oder > 80 MPa (gemessen nach DIN EN ISO 604) und einer Biegezugfestigkeit von > 5 MPa, insbesondere > 10 MPa oder > 15 MPa (gemessen nach DIN EN ISO 178).

Um diese hohen Festigkeiten und anspruchsvollen mechanischen Eigenschaften erreichen zu können, wird vorzugsweise (insbesondere im Falle der Verwendung Epoxygruppen tragender Silane) auf den Einsatz von elastomeren Struktureinheiten, insbesondere auf der Härterseite, weitgehend oder vorzugsweise vollständig verzichtet.

Die Bruchdehnung wird genauer gemäß DIN EN ISO 527-1 an Schulterstäben des Probekörpertyps 1 BA (nach DIN EN ISO 527-2) bestimmt nach 24 h Lagerung bei Raumtemperatur.

Schließlich kann auch nach den Verfahren gemäß den Leitlinien von der European Organisation for Technical Approvals (EOTA) (2001): ETAG N° 001 Ausgabe November 2006, Leitlinie für die europäische technische Zulassung für Metalldübel zur Verankerung im Beton, Teil 5: Verbunddübel, Februar 2008 eine gegenüber entsprechenden Kunstmörteln ohne Silanzusatz erhöhte Leistungsfähigkeit im gerissenen Beton gefunden werden.

Wie bereits erwähnt, eignen sich die erfindungsgemäß verwendeten Befestigungssysteme nach der vorliegenden Erfindung daher besonders für die Verwendung und Verfahren oder Methoden zur Befestigung von Verankerungsmitteln in gerissenen Substraten, insbesondere im gerissenen Beton, was jeweils bevorzugte Ausführungsformen der Erfindung darstellt.

Die nachfolgenden Definitionen dienen der Klärung bestimmter Begriffe oder Symbole und der Beschreibung besonderer Ausführungsformen der Erfindung, wobei in den vor- und nachstehend genannten Ausführungsformen der Erfindung einzelne, mehrere oder alle Begriffe oder Symbole durch speziellere Definitionen ersetzt werden können, was zu besonderen Ausführungsformen der Erfindung führt.

Wo Gewichtsangaben in Prozent (Gew.-%) gemacht werden, beziehen sich diese, wenn nichts anderes gesagt ist, auf die Gesamtmasse der Reaktanden und Zusätze des erfindungsgemäß verwendeten Befestigungsmörtelsystems (also die in der nach dem Mischen auszuhärtenden Masse vorhandenen Bestandteile ohne Verpackung und andere mögliche Teile wie Statikmischer oder dergleichen).

Bei den ein oder mehreren keine oder mindestens eine Amino-, sek. Amino-, Mercapto-, Isocyanato-, Alkenyl-, (Meth)acryloyl-, Anhydrido- und/oder (insbesondere) Epoxy-Gruppe tragenden, insbesondere Amino-, Thiol (= Mercapto)- und/oder (vorzugsweise) Epoxygruppen beinhaltenden, und mindestens eine Si-gebundene hydrolysierbare Gruppe beinhaltenden Silanen handelt es sich in besonderen Ausführungsformen der Erfindung um solche der Formel I,

[R₁-X-(CH₂)ₙ-]ₚ-Si(R^{B})_{q}(L)ₜ (I)

worin
X für S (bevorzugt) oder NR₁* (bevorzugt) oder O oder NCO oder nichts steht; wobei X nichts ist (= fehlt), wenn R₁ für Anhydrido steht;
R₁ und R1*, alle unabhängig voneinander, für nichts, Wasserstoff, Cycloalkyl, Alkyl, Aminoalkyl, (Meth)acryloyl, Aryl, Aralkyl, Acyl, Heterocyclyl (insbesondere Anhydrido) oder für einen Rest der Formel -[(CH₂)_{n*}]_{p*}-Si(R^{B*})_{3-t*}(L*)_{t*} oder (insbesondere) für Epoxyalkyl, stehen, worin, jeweils unabhängig vom anderen Rest, R^{B}* die nachfolgend für R^{B} genannten Bedeutungen, L* die nachfolgend für L genannten Bedeutungen und n*, p* und t* jeweils die nachfolgend genannten Bedeutungen haben; wobei R₁ Wasserstoff ist, wenn X für S steht; wobei X für O steht wenn R₁ Epoxyalkyl oder (Meth)acryloyl ist; wobei R₁ nichts ist, wenn X für NCO (= Isocyanato) steht;
R^{B} unabhängig voneinander für eine Alkyl-, Alkenyl-, Arylalkyl- oder Arylgruppe steht, vorzugsweise für Alkyl und/oder (ferner) Alkenyl,
L für einen hydrolysierbaren Rest, insbesondere Alkoxy, steht,
n und, falls vorhanden, n* unabhängig voneinander für eine positive ganze Zahl, insbesondere 1 bis 10, stehen;
p für 0 bis 3 steht und, falls vorhanden, p* unabhängig für 1 bis 3 steht;
q für 0 bis 2 steht; und
t für 1 bis 4 steht und, falls vorhanden, t* unabhängig für 1 bis 3 steht,
mit der Maßgabe, dass gilt: p + q + t = 4 und, falls vorhanden, p* + (3-t*) + t* = 4.

In einer Ausführungsform der Erfindung können (mindestens auch) solche Silane verwendet werden, die den alpha-Effekt zeigen, also z.B. worin n und gegebenenfalls n* in obiger Formel I gleich 1 ist (n = 1 und ggf. n* = 1 in Formel I), z.B. N-Cyclohexylaminomethyl-methyldiethoxysilan, N-Cyclohexylaminomethyl-trimethoxysilan, Phenylaminomethyl-trimethoxysilan, Phenylaminomethyl-methyldimethoxysilan, oder 3-(Meth)acryloyl-oxymethyltrialkoxy (wie trimethoxy) silan.

Weitere Silane mit hydrolysierbaren Gruppen können beinhaltet sein, beispielsweise (bezogen auf das Gesamtgewicht aller Silane) bis 80 Gew.-%, bis 70 Gew.-%, bis 60 Gew.-%, bis 50 Gew.-%, bis 40 Gew.-%, bis 30 Gew.-%, bis 20 Gew.-% oder bis 10 Gew.% - dies impliziert beispielsweise Alkoxysilanverbindungen oder Silan-Vernetzer, wie Vinylalkoxysilane, z.B. Vinyltrimethoxysilan oder Vinyltriethoxysilan oder (ferner oder insbesondere) Ester der (Poly)-Kieselsäure (wie z.B. Dynasilan® 40 (ein Ethylpolysilikat) oder Dynasylan® A, Evonik GmbH, Frankfurt am Main, Deutschland), die ein Steuern des Vernetzungsgrades ermöglichen, oder Mischungen von zwei oder mehr davon.

Weitere besondere Ausführungsformen der vorliegend offenbarten Erfindungsgegenstände beinhalten die Verwendung von Silanen der Formel III,

Si(R^{B})₄₋ₜ(L)ₜ (III)

worin R^{B} unabhängig voneinander für eine Alkyl-, Alkenyl-, Arylalkyl- oder Arylgruppe steht, vorzugsweise für Alkyl und/oder (ferner) Alkenyl,
L für einen hydrolysierbaren Rest, insbesondere Alkoxy, steht,
   und
t für 1 bis 4 steht. Diese fallen unter Silane, die zur Teilnahme an der Polymerisierung mit einem Kunstharz auf Basis des oder der härtenden Reaktiv-Kunstharze auf Epoxidbasis befähigte reaktive Gruppen nicht aufweisen.

Auch Gemische mit zwei oder mehr der in vor- oder nachstehenden Absätzen genannten Silane der Formeln I, II und/oder III, oder jeweils deren Verwendungen, bilden besondere Varianten der erfindungsgemäßen Ausführungsformen.

Bei den besonders hervorzuhebenden (i) Aminogruppen und/oder Thiol-Gruppen und/oder (insbesondere) Epoxyalkyl und (ii) mindestens eine Si-gebundene hydrolysierbare Gruppe beinhaltenden Silanen handelt es sich vorzugsweise um solche der Formel I, wie oben gezeigt, worin p für 1 steht,
X für NR1* oder für S oder, insbesondere wenn R₁ Epoxyalkyl bedeutet, für O steht;
R₁ und R₁*, alle unabhängig voneinander, für nichts, Wasserstoff, Cycloalkyl, Alkyl, Aminoalkyl, Aryl, Aralkyl, Acyl , für einen Rest der Formel -[(CH₂)ₙ]-Si(R^{B*})_{3-t*}(L*)_{t* *} oder (vorzugsweise) für Epoxyalkyl stehen, worin, jeweils unabhängig vom anderen Rest, R^{B}* die nachfolgend für R^{B} genannten Bedeutungen, L* die nachfolgend für L genannten Bedeutungen und n*, p* und t* jeweils die nachfolgend genannten Bedeutungen haben; wobei R₁ Wasserstoff ist, wenn X für S steht;
R^{B} unabhängig voneinander für eine Alkyl-, Alkenyl, Arylalkyl- oder Arylgruppe stehen kann, vorzugsweise für Alkyl und/oder (ferner) Alkenyl,
L für einen hydrolysierbaren Rest, insbesondere Alkoxy, steht;
n und, falls vorhanden, n* unabhängig voneinander für eine positive ganze Zahl, insbesondere 1 bis 10, stehen;
p für 0 bis 4 steht und, falls vorhanden, p* unabhängig für 1 bis 3 steht;
q für 0 bis 2 steht; und
t und, falls vorhanden, t* unabhängig voneinander für 1 bis 3 stehen;
mit der Maßgabe, dass gilt: P + q + t = 4 und, falls vorhanden, p* + (3-t*) + t* = 4.

Unter Epoxy-, Amino- und/oder Thiolgruppen beinhaltenden und mindestens eine Si-gebundene hydrolysierbare Gruppe beinhaltenden Silanen sind insbesondere solche zu verstehen, die ein oder mehrere Gruppen ausgewählt aus R₁**-NH oder SH und mindestens eine Si-gebundene hydrolysierbare Gruppe tragen, wie beispielsweise entsprechende bevorzugte Silane der Formel II,

[Y-(CH₂)ₐ-]-Si(R^{B})₃₋ₜ(L)ₜ (II)

worin
Y für Epoxyalkoxy (bevorzugt) R₁**-NH oder SH, wobei R₁** (auch wo oberhalb von Formel II erwähnt) für Wasserstoff, Alkyl oder Aminoalkyl steht,
R^{B} unabhängig voneinander für eine Alkyl-, Alkenyl-, Arylalkyl- oder Arylgruppe steht, vorzugsweise für Alkyl und/oder (ferner) Alkenyl,
L für einen hydrolysierbaren Rest, insbesondere Alkoxy, steht,
a für eine positive ganze Zahl, insbesondere 1 bis 10, vor allem 1 bis 3, steht; und t für 1 bis 3 steht.

Aryl ist innerhalb dieser Offenbarung stets vorzugsweise ein unsubstituierter oder (z.B. durch Alkyl, Alkoxy (= Alkyloxy), Alkenyl, hydroxy, oder ferner Halogen, wie Fluor, Chlor oder Brom, oder Cyano) ein- oder unabhängig mehrfach, z.B. 1- bis 3-fach, substituierter aromatischer Rest mit 6 bis 18 Ringkohlenstoffatomen, beispielsweise Phenyl, Naphthyl oder Toluyl.

Aralkyl ist innerhalb dieser Offenbarung stets Aryl wie zuvor definiert, welches an Alkyl wie vorstehend definiert gebunden ist, beispielsweise Benzyl, kann aber bei Aufzählungen innerhalb dieser Offenbarung vorzugsweise weggelassen werden.

Cycloalkyl steht insbesondere für mono-, di- oder trizyklisches, vorzugsweise monozyklisches, Cycloalkyl mit 3 bis 20 Kohlenstoffatomen, vorzugsweise mit 3 bis 10 Kohlenstoffatomen, im Ring, insbesondere für Cyclopentyl oder Cyclohexyl.

Epoxyalkyl steht vorzugsweise für Alkyl wie oben definiert, das durch eine Epoxygruppe unter Ringbildung substituiert ist.

Epoxyalkyl ist insbesondere Epoxy-C₁-C₇-alkoxy, wie insbesondere(2,3-Epoxy-propan-1-yl) der Formel 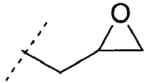 (die gestrichelte Linie markiert das Ende der Bindung zum Rest des Moleküls).
Epoxyalkoxy ist insbesondere Epoxy-C₁-C₇-alkoxy, wie insbesondere ein Rest der Formel 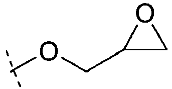 (die gestrichelte Linie markiert das Ende der Bindung zum Rest des Moleküls).

Acyl steht innerhalb dieser Offenbarung stets für einen Rest einer Carbonsäure oder einer Sulfonsäure, beispielsweise einen Aryl-, Alkyl- oder Aralkyl-carbonsäure- oder -sulfonsäureRest, wie C₁-C₇-Alkanoyl, z.B. Acetyl oder Propionyl, Aroyl (Aryl-C(=O)-), wie Benzoyl, oder dergleichen.

Alkyl steht innerhalb dieser Offenbarung stets für insbesondere einen unverzweigten oder ein- oder mehrfach verzweigten Alkylrest mit beispielsweise 1 bis 20, vorzugsweise 1 bis 10 Kohlenstoffatomen, beispielsweise mit 1 bis 4 Kohlenstoffatomen, worin ein oder mehrere, z.B. 1 bis 3, vorzugsweise nicht direkt benachbarte, insbesondere durch 2 Kohlenstoffatome getrennte und nicht endständige, ein C-Atom beinhaltende Kettenabschnitte (wie -CH₂- oder -C(-)(H)- durch jeweils ein Heteroatom, wie -N(-)-, -NH-, -O- oder -S-, ersetzt sein können, , wie z.B. Methyl, Ethyl, n-Propyl, Isopropyl, n-Butyl, sek.-Butyl, Isobutyl oder tert-Butyl.

Alkenyl steht innerhalb dieser Offenbarung stets für einen unverzweigten oder ein- oder mehrfach verzweigten einfach oder mehrfach ungesättigten Alkylrest mit 2 bis 20, vorzugsweise 2 bis 10, z.B. 2 bis 4 Kohlenstoffatomen, wie Vinyl, Allyl oder Buten-1- oder -2-yl.

Aminoalkyl steht für mit ein oder ferner mehreren Aminogruppen substituiertes Alkyl, wie gerade definiert.

Heterocyclyl bedeutet insbesondere einen, gegebenenfalls auch substituierten, z.B. wie für Aryl oben definiert, mono- di- oder trizyklischen, insbesondere monozyklischen Rest 3 bis 20, vorzugsweise 3 bis 8 Ringatomen, von denen ein oder mehrere, insbesondere 2, als Heteroatome unabhängig voneinander ausgewählt aus N, O und S vorliegen, und kann durch ein oder mehrere Oxogruppen substituiert sein, insbesondere solche, die an Ringkohlenstoffatome gebunden sind, die über ein O-Heteroatom gebunden sind (was zu Anhydrido führt).

Unter Heterocyclyl fällt somit insbesondere auch Anhydrido, bei dem es sich um einen cyclischen Rest handelt, der folgendes ringschließendes Brückenelement enthält: -C(=O)-O-C(=O)-. Der Ring beinhaltet also eine Carbonsäureanhydridgruppe. Ein mögliches bevorzugtes Beispiel ist 2,5-Dioxo-oxolan-3-yl, ein anderes die entsprechende ungesättigte Variante 2,5-Dioxo-oxol- -3-yl mit Doppelbindung zwischen den C-Atomen in Stellung 3 und 4 des Rings, ein weiteres ein in 3,4-Stellung benzoannelierter 2,5-Dioxolan-3-ylrest.

Aromatisch bedeutet, dass die entsprechenden Reste wie Aryl oben definiert sind.

Aromatisch-aliphatisch (z.B. Arylalkyl) bedeutet, dass die entsprechenden Reste Kombinationen aus aliphatischen Resten und aromatischen Resten, wie vorstehend genannt, beinhalten.

Dass "X für nichts" steht oder X nichts ist oder dergleichen, bedeutet, dass der Rest "-X-" in der jeweiligen Formel für eine einfache Bindung steht. Dass R₁ "nichts" ist, bedeutet, dass der Rest R₁ fehlt.

"Falls vorhanden" bezieht sich darauf, dass ein Rest oder ein Symbol abhängig von anderen Definitionen vorhanden sein kann oder fehlen kann, beispielsweise darauf, dass im Falle, dass nur, wenn p in Formel I 1 bis 3 ist, und R₁ einen Rest der Formel -[(CH₂)_{n*}]_{p*}-Si(R^{B*})_{3-t*}(L*)ₜ* bedeutet, n*, p*, R^{B*}, L* und t* überhaupt vorhanden sein können.

Silane, die zur Teilnahme an der Polymerisierung mit einem Kunstharz auf Basis des oder der härtenden Reaktiv-Kunstharze auf Epoxidbasis befähigte reaktive Gruppen aufweisen oder nicht, enthalten diese reaktiven Gruppen anders ausgedrückt optional, das heißt, sie können sie enthalten.

Wo von "Silanen" oder anderen Bestandteilen im Plural die Rede ist, bedeutet dies stets "ein oder mehrere".

"Beinhalten" oder "umfassen" bedeutet, dass neben den genannten Komponenten oder Merkmalen noch andere vorhanden sein können, steht also für eine nicht abschließende Aufzählung, im Gegensatz zu "enthalten", das eine abschließende Aufzählung der bei seiner Verwendung aufgezählten Komponenten oder Merkmale bedeutet.

"Teilweise oder ausschließlich" oder "mindestens teilweise" bedeutet, dass die danach genannten Bestandteile neben anderen Bestandteilen der entsprechenden Komponente oder ausschließlich vorliegen können, beispielsweise (z.B. bei den Silanen oder Reaktivharzen oder Härtern als Komponenten) bezogen auf die jeweils definierte Komponente in Anteilen von bis zu maximal 10, 20, 30, 40, 50, 60, 70 oder 80 bis 90 oder 100 Gew.-%.

Wo das Attribut "ferner" erwähnt wird, bedeutet dies, dass Merkmale ohne dieses Attribut stärker bevorzugt sein können.

"Und/oder" bedeutet, dass die genannten Merkmale/Substanzen jeweils alleine oder in Kombination von zwei oder mehr der jeweils genannten Merkmale/Substanzen vorliegen können.

(Meth)acryl steht für Acryl, Methacryl oder Acryl und Methacryl (als Gemisch).

Unter Si-gebundenen hydrolysierbaren Gruppen (in dieser Offenbarung auch mit L symbolisiert) sind beispielsweise Halogenatome (Halogen, wie Chloro), Ketoximate, Amino, Aminoxy, Mercapto, Acyloxy, Aryloxy, Aralkyloxy (= Arylalkoxy) oder insbesondere Alkyloxy (Alkoxy) zu verstehen.

Unter Si-gebundenen hydrolysierbaren Gruppen sind insbesondere solche Gruppen L zu verstehen, die Bestandteil einer Gruppe der Formel Z sind,

Si(R^{B})₃₋ₜ(L)ₜ (Z)

worin R^{B} unabhängig voneinander für eine Alkyl-, Alkenyl, Arylalkyl- oder Arylgruppe stehen kann, vorzugsweise für Alkyl und/oder (ferner) Alkenyl,
t für eine ganze Zahl von 1 bis 3 steht und
L für eine Si-gebundene hydrolysierbare Gruppe, insbesondere Alkoxy, steht.

Das oder die erfindungsgemäß zugesetzten ein oder mehrere keine oder mindestens eine Amino-, sek. Amino-, Mercapto-, Isocyanato-, Alkenyl-, (Meth)acryloyl-, Anhydrido- und/oder (insbesondere) Epoxy-Gruppe beinhaltende(n), und zugleich mindestens eine Si-gebundene hydrolysierbare Gruppe beinhaltende Silan(e) haben vorzugsweise mittlere oder absolute Molekulargewichte von 2000 oder kleiner, 1000 oder kleiner, 900 oder kleiner, 800 oder kleiner, 700 oder kleiner, 600 oder kleiner oder insbesondere 500 oder kleiner oder insbesondere 400 oder kleiner. Vorzugsweise handelt es sich bei den Silanen und niedermolekulare, niederviskose Substanzen, insbesondere andere als höhermolekulare Verbindungen (worunter z.B. Präpolymeren fallen).

In besonderen Ausführungsformen der Erfindung dienen als (erfindungsgemäß zugesetzte) Silane der Formel I ein oder mehrere ausgewählt aus der Gruppe, die aus 3-Aminopropyltrialkoxysilanen, wie 3-Aminopropyl-trimethoxysilan oder 3-Aminopropyl-triethoxysilan, N-(Aminoalkyl,)-3-aminopropyltrialkoxysilan, wie N-(2-Aminoethyl)-3-aminopropyltrimethoxysilan oder N-(N'-(2-Aminoethyl)-2-aminoethyl)-aminopropyltrimethoxysilan, 3-Mercaptopropyltrialkoxysilan, wie 3-Mercaptopropyltrimethoxysilan, Tetraalkoxysilan, wie Tetraethoxysilan, Bis-(3-trialkoxysilylpropyl)amin, wie Bis-(3-trimethoxysilylpropyl)amin, und ferner 3-(Meth)acryloyl-oxypropyltrialkoxysilanen, wie 3-(Meth)acryloyl-oxypropyltrimethoxysilan und/oder Alkenylalkoxysilane wie Vinyltrimethoxysilan oder Vinyltriethoxysilan, und/oder Tetraalkoxysilan, wie Tetraethoxysilan, Tetramethoxysilan oder Tetrapropoxysilan oder (bevorzugt) 3-Glycidyloxypropyltrialkoxysilanen, wie 3-Glycidyloxypropyltrimethoxysilan oder 3-Glycidyloxypropyltriethoxysilan, oder (ferner oder insbesondere) Alkoxypolysilikat, wie Ethyl- oder Propylpolysilikat; besteht; oder Gemische von zwei oder mehr davon.

Die keine oder mindestens eine Amino-, sek. Amino-, Mercapto-, Isocyanato-, Alkenyl-, (Meth)acryloyl-, Anhydrido- und/oder (insbesondere) Epoxy-Gruppe tragenden, insbesondere Epoxy- (bevorzugt), Amino- und/oder Thiolgruppen beinhaltenden, und mindestens eine Si-gebundene hydrolysierbare Gruppe beinhaltenden Silane liegen in einem erfindungsgemäßen oder erfindungsgemäß zu verwendenden Injektions-Kunstmörtelsystem beispielsweise in einem Gewichtanteil von 0,1 bis 25, insbesondere von 1 oder mehr Gew.-%, wie von 1 bis 20 Gew.-%, vorzugsweise von 2 oder mehr Gew.-%, wie von 2 bis 20 oder bis 15 Gew.-%, von 3 oder mehr Gew.-%, wie von 3 bis 20 oder bis 10 Gew.-%, noch stärker bevorzugt von 4 oder mehr Gew.-%, z.B. von 4 bis 20 oder bis 6 Gew.-%, vor.

Die bei der erfindungsgemäßen Verwendung von Befestigungsmörtelsystemen beinhalteten härtenden (hier auch gleichbedeutend mit "härtbar" verwendet) Reaktiv-Kunstharze auf Epoxidbasis beinhalten eine Epoxidkomponente, vorzugsweise auf Basis von Glycidylverbindungen, beispielsweise solchen mit einer durchschnittlichen Glycidylgruppenfunktionalität von 1,5 oder größer, insbesondere von 2 oder größer, z.B. von 2 bis 10, die optional weitere(n) Glycidylether als Reaktivverdünner beinhalten kann. Bei den Epoxiden der Epoxidkomponente handelt es sich vorzugsweise um Poly(einschließlich Di)-glycidylether von mindestens einem mehrwertigen Alkohol oder Phenol, wie Novolak, Bisphenol F oder Bisphenol A, oder Gemische solcher Epoxide, beispielsweise erhältlich durch Umsetzung der entsprechenden mehrwertigen Alkohole mit Epichlorhydrin. Beispiele sind Trimethylolpropantriglycidylether, Novolak-Epoxidharze, Bisphenol-A-Epichlorhydrinharze und/oder Bisphenol-F-Epichlorhydrinharze, beispielsweise mit einem durchschnittlichen Molekulargewicht von ≤ 2000. Die Epoxidharze können beispielsweise ein Epoxidäquivalent von 120 bis 2000, vorzugsweise 150 bis 400, wie insbesondere 155 bis 195, beispielsweise 165 bis 185 aufweisen. Der Anteil an der Gesamtmasse der Reaktanden und Zusätze des Injektions-Kunstmörtelsystems beträgt vorzugsweise 5 bis unter 100 Gew.-%, insbesondere 10 bis 80 Gew.-%, 10 bis 70 Gew.-% oder 10 bis 60 Gew.-%. Möglich sind auch Gemische von zwei oder mehr solcher Epoxid-Komponenten. Geeignete Epoxidharze, Reaktivverdünner und Härter sind auch in dem Standardwerk von Lee H und Neville K, "Handbook of Epoxy Resins" (New. York: McGraw-Hill), 1982 zu finden (diese Verbindungen werden hier durch Bezugnahme aufgenommen).

"Auf Basis" bedeutet insbesondere, dass die erfindungsgemäß verwendeten (Injektions-)Kunstmörtelsysteme neben den genannten Komponenten (wie (A) und (B)) auch weitere übliche Inhaltsstoffe (z.B. Additive oder andere oben oder unten genannte Bestandteile) beinhalten können. Diese weiteren Inhaltsstoffe können beispielsweise in einer Menge von insgesamt bis zu 80, vorzugsweise zwischen 0,01 und 65 Gew.-%, vorliegen. Auch wo nicht ausdrücklich "auf Basis" erwähnt wird, sind derartige übliche Inhaltsstoffe mit beinhaltet.

Wichtige Beispiele für weitere Inhaltsstoffe sind ein oder mehrere ausgewählt aus Beschleunigern, Inhibitoren, reaktiven Verdünnern, Thixotropiermitteln, Füllstoffen und weiteren Additiven.

Als Beschleuniger können z.B. tert-Amine, wie Imidazole oder tert-Aminophenole, wie 2,4,6-trimethylaminomethylphenol, Organophosphine oder Lewis-Basen oder -Säuren, wie Phosphorsäureester, oder Gemische von zwei oder mehr davon, in einer oder (insbesondere bei Mehrkomponentensystemen) bei mehreren der Komponenten, bevorzugt jeweils in einer Härterkomponente, beinhaltet sein, beispielsweise in einem Gewichtanteil von 0,001 bis 15 Gew.-%, bezogen auf die Gesamtmasse der Reaktanden und Zusätze des Injektions-Kunstmörtelsystems.

Als Thixotropiermittel können übliche Rheologiehilfsmittel verwendet werden, wie pyrogene Kieselsäure. Sie können z.B. in einem Gewichtsanteil von 0,001 bis 50 Gew.-%, beispielsweise von 1 bis 20 Gew.-%, zugesetzt werden.

Als Füllstoffe finden übliche Füllstoffe, insbesondere Zemente (z.B. Portlandzemente oder Tonerdeschmelzzemente), Kreiden, Sand, Quarzsand, Quarzmehl oder dergleichen, die als Pulver, in körniger Form oder in Form von Formkörpern zugesetzt sein können, Verwendung, oder andere, wie beispielsweise in WO 02/079341 und WO 02/079293 genannt, oder Gemische davon, wobei die Füllstoffe ferner oder insbesondere auch silanisiert sein können, beispielsweise als amino- oder epoxysilanbehandeltes Quarzmehl, wie Silbond AST oder EST® der Fa. Quarzwerke GmbH, als amino- oder glycidyl-silanbehandelte Kieselerde, wie Aktisil AM oder EM® von Hoffmann Mineral, oder amino- oder glycidyl-silan-behandelte pyrogene Kieselsäuren. Die Füllstoffe können in einer oder in mehreren Komponenten beispielsweise eines erfindungsgemäßen Mehrkomponentenkits, beispielsweise einer oder beiden Komponenten eines entsprechenden Zweikomponentenkits, vorhanden sein; der Anteil an Füllstoffen beträgt vorzugsweise 0 bis 90 Gew.-%, beispielsweise 10 bis 90 Gew.-% Zusätzlich oder alternativ können hydraulisch härtbare Füllstoffe, wie Gips, Branntkalk oder Zement (z.B. Tonerd- oder Portlandzement), Wassergläser oder aktive Aluminiumhydroxide, oder zwei oder mehr davon, zugesetzt werden.
Auch weitere Additive können zugesetzt sein, wie Weichmacher, nicht reaktive Verdünnungsmittel, Flexibilisatoren, Stabilisatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, Gemische von zwei oder mehr davon. Derartige weitere Zusätze können vorzugsweise insgesamt in Gewichtsanteilen von insgesamt 0 bis 90 %, beispielsweise von 0 bis 40 Gew.-%, zugesetzt sein.
Bestimmte der bei der Definition der Epoxide genannten Verbindungen, wie Trimethylolpropantriglycidylether oder Hexandioldiglycidylether, die eine geringere Viskosität als aromatische Gruppen enthaltende Epoxide aufweisen, können auch als reaktive Verdünner eingesetzt werden, beispielsweise in einem Gewichtsanteil von 0,1 bis 90 Gew.-%, z.B. zwischen 0,5 und 75 Gew.-% oder zwischen 1 und 40 Gew.-%.
Der Härter beinhaltet mindestens eine zur Epoxidhärtung gebräuchliche Verbindung (Reaktionspartner bei der Polyaddition). Der Begriff "Härter" bedeutet dabei vorzugsweise mindestens eine zur Epoxidhärtung gebräuchliche Verbindung mit oder ohne Füllstoffzusatz und/oder weitere Zusätze, wie Wasser, Verdickungsmittel und/oder weitere Zusatzstoffe, wie Farbstoffe und dergleichen, mit anderen Worten, die komplette Härterkomponente. Der Härter kann als separate Komponente und/oder (insbesondere in geschützter Form, d.h. z.B. in mikroverkapselter Form) auch in der Reaktionsharzformulierung (als einer härtbaren Komponente, d.h. einer solchen, die nach Mischung mit dem Härter nach Aufbrechen der Hülle der Mikrokapsel durch Polymerisation aushärtet) eingearbeitet sein. Übliche Zusätze können zugesetzt sein, wie z.B. Füllstoffe (insbesondere wie oben definiert) und/ oder (insbesondere zur Herstellung einer Paste oder Emulsion) Lösungsmittel, wie Benzylalkohol und/oder Wasser, zugesetzt sein, wobei Wasser oder Säuren oder Gemische davon, wie Wasser, Salicylsäure und/oder Essigsäure, als "Härter" (Initiator) für die Kondensation der hydrolysierbare Gruppen beinhaltenden Silane dienen kann und nur enthalten ist, wenn die Härterkomponente ansonsten frei von Silanen ist.
Bei den zur Epoxidhärtung gebräuchlichen Verbindungen (die als Reaktionspartner bei der Polyaddition fungieren) handelt es sich insbesondere um solche mit zwei oder mehr Gruppen ausgewählt aus Amino, Imino, und Mercapto, beispielsweise entsprechende Amine (bevorzugt), Thiole, oder Aminothiole, oder Gemische davon, beispielsweise wie in Lee H and Neville K, "Handbook of Epoxy Resins" (New. York: McGraw-Hill), 1982, genannt, welches hier diesbezüglich durch Bezugnahme aufgenommen wird, beispielsweise darin genannte Di- oder Polyamine, und/oder Di- oder Polythiole.
In besonderen Ausführungsformen der Erfindung weisen die zur Epoxidhärtung gebräuchlichen Verbindungen, die Epoxidbasis oder beide keine Kautschukmodifikation auf.
Die zur Epoxidhärtung (allgemein) gebräuchlichen Verbindungen umfassen beispielsweise in einer Ausführungsform der Erfindung
- Di- oder Polyamine wie insbesondere aliphatische (wie Ethylendiamin), cycloaliphatische und aromatische Di- oder Polyamine, Amidoamine, Aminaddukte, Polyetherdiamine oder Polyphenyl/Polymethylen-polyamine, Mannich-Basen, Polyamide und dergleichen (wobei Mannich-Basen, insbesondere wie in der Druckschrift WO 2005/090433, vor allem auf den Seiten 3, letzter, bis S. 6, 2. Absatz offenbart, wie in Beispiel 1 oder insbesondere 2 davon, alleine oder im Gemisch mit ein oder mehreren weiteren Di- oder Polyaminen besonders bevorzugt sind);
- Di- oder Polythiole wie insbesondere di- oder höherfunktionale Thiole, beispielsweise Dimercapto-α,ω-C1-C12-Alkane, 4,4'-Dimercapto-dicyclohexylmethan, Dimercaptodiphenylmethan oder dergleichen;
- ferner aliphatische Aminole, wie insbesondere Hydroxyniederalkylamine, wie Ethanolamin, Diethanolamin oder 3-Aminopropanol, oder aromatische Aminole, wie 2-, 3- oder 4-Aminophenol.
Es können auch Mischungen von zwei oder mehr der genannten zur Epoxidhärtung gebräuchlichen Verbindungen verwendet werden bzw. beinhaltet sein.

Die zur Epoxidhärtung gebräuchlichen Verbindungen liegen, falls vorhanden, vorzugsweise in Mengen von bis zu 95 Gew.-%, vorzugsweise von 2 bis 70 Gew.-%, bezogen auf die Gesamtmasse der Reaktanden und Zusätze der auszuhärtenden Masse des Injektions-Kunstharzsystems vor.

Bezogen auf die Härterkomponente liegt der Anteil der entsprechenden Verbindungen in einer möglichen bevorzugten Ausführungsform der Erfindung bei 1 bis 100 Gew.-% (da auch Aminosilane allein als Härter eingesetzt werden können), beispielsweise bei 3 bis 95 Gew.-%, z.B. 4 bis 95 Gew.-%, 5 bis 90 Gew.-% oder 10 bis 80 Gew.-%.

Insbesondere im Falle einer Härterkomponente eines erfindungsgemäßen Mehrkomponentensystems können auch weitere Zusätze Bestandteil des "Härters" sein, wie Wasser, organische Lösungsmittel, wie Benzylalkohol, Füllstoffe (z.B. wie oben genannte) und weitere der oben genannten Additive, beispielsweise in einem Gewichtanteil von insgesamt 0,01 bis 70 Gew.-%, z.B. von 1 bis 40 Gew.-%.

Unter einem Loch oder Spalt ist ein solches Loch oder ein solcher Spalt zu verstehen, das oder der in einem festen (insbesondere bereits als solcher fertiggestellten) Untergrund (Substrat), insbesondere Mauerwerk oder Beton, insbesondere einem rissigen Substrat, wie rissigem Beton, vorhanden und von der Außenseite her zugänglich ist, beispielsweise ein Bohrloch, oder ferner ein beim Mörteln mit Zement oder Gips ausgesparter Bereich oder dergleichen.

In einer besonderen Ausführungsform der Erfindung sind das oder die Epoxide (Epoxidkomponente) und der (zugehörige) Härter (zur Epoxidhärtung gebräuchliche Verbindung(en)) voneinander getrennt in einem Zwei- oder Mehrkomponentensystem aufbewahrt, bevor sie am gewünschten Ort (z.B. bei oder in einem Loch oder Spalt, wie Bohrloch) miteinander vermischt werden.

Insbesondere handelt es sich um Zwei-Komponentensysteme, in denen das Gewichts-verhältnis von einer ersten Komponente (A) zu einer zweiten Komponente (B) bei 99 : 1 bis 1 : 99, bei 99 : 1 bis 50 : 50, bei 99 : 1 bis 60 : 40 oder bei 99 : 1 bis 70 : 30 liegt.

Komponenten, die sonst unerwünscht miteinander reagieren würden, wie Wasser und/oder Säuren und die hydrolysierbaren Gruppen der erfindungsgemäß zu verwendenden Silane oder Wasser und Zement, sind dabei vorzugsweise vor dem Einsatz im Loch oder Spalt voneinander getrennt zu halten.

Beispielsweise beinhaltet daher eine Komponente (A) eines solchen Zwei- oder ferner Mehrkomponentensystems das oder die Epoxide, während die Komponente (B) den Härter beinhaltet. Die Silane können unabhängig als eine dritte Komponente vorgesehen sein, oder sie sind Bestandteil der Epoxid- und/oder Härterkomponenten. Vorzugsweise sind dabei die Silane, welche eine Amino-, sek. Amino- und/oder Mercapto-Gruppe aufweisen, in der Härterkomponente beinhaltet, während Epoxy-, ferner auch Isocyanato-, (Meth)acryloyl- und/- oder Anhydrido-Gruppen tragende Silane vorzugsweise in der Epoxid-Komponente beinhaltet sind. Silane, die hydrolysierbare Gruppen aufweisen, können in beiden Komponenten vorliegen. In allen Fällen sind die Komponenten, in denen Silane vorhanden sind, von Wasser weitgehend frei zu halten (z.B. weniger als 0,1 %, insbesondere weniger als 0,05 Gew.-% Wasser bezogen auf das Gesamtgewicht der jeweiligen Komponente), um keine unerwünschte Hydrolyse und Vernetzung mittels der Si-gebundenen hydrolysierbaren Gruppen zu verursachen, oder die Silane und das Wasser sind (beispielsweise durch Mikroverkapselung) voneinander getrennt zu halten.

Die erfindungsgemäß verwendeten Injektions-Kunstharzsysteme können folglich als Ein-(wenn ansonsten mit weiteren vorhandenen Komponenten reaktive Komponenten, z.B. der Härter geschützt, beispielsweise eingekapselt sind) oder vorzugsweise Mehr-Komponentensysteme (Mehrkomponentenkit) vorgesehen sein und auch verwendet werden.

Unter einem Mehrkomponentenkit ist insbesondere ein Zwei- oder (ferner) Mehrkomponentenkit (vorzugsweise ein Zweikomponentenkit) mit einer Komponente (A), welche ein oder mehrere Epoxy- wie Glycidyl-gruppen tragende Verbindungen beinhaltet, wie oben und unten beschrieben, und Härter (Komponente (B)), wobei weitere Zusätze in einer oder beider der Komponenten vorgesehen sein können, vorzugsweise eine Zwei- oder ferner Mehrkammervorrichtung, zu verstehen, worin die miteinander reaktionsfähigen Komponenten (A) und (B) und ggf. weitere separate Komponenten so enthalten sind, dass ihre Bestandteile während der Lagerung nicht (insbesondere unter Aushärtung) miteinander reagieren können, vorzugsweise so, dass ihre Bestandteile vor der Anwendung nicht miteinander in Berührung kommen, das es jedoch ermöglicht, die Komponenten (A) und (B) und gegebenenfalls weitere Komponenten zur Befestigung an der gewünschten Stelle, beispielsweise direkt vor oder in einem Loch, so zu vermischen und erforderlichenfalls einzubringen, dass dort die Härtungsreaktion stattfinden kann. Auch geeignet sind Patronen, beispielsweise aus Kunststoff, Keramik oder insbesondere Glas, in denen die Komponenten durch (beispielsweise bei Eintreiben eines Verankerungselements in ein Loch oder einen Spalt, wie ein Bohrloch) zerstörbare Abgrenzungswandungen oder integrierte separate zerstörbare Behältnisse voneinander getrennt angeordnet sind, beispielsweise als ineinander verschachtelte Patronen, wie Ampullen; sowie insbesondere Mehr- oder insbesondere Zweikomponentenkartuschen (die ebenfalls besonders bevorzugt sind), in deren Kammern die mehreren oder vorzugsweise zwei Komponenten (insbesondere (A) und (B)) des erfindungsgemäß verwendeten Befestigungsmörtels mit oben und nachstehend genannten Zusammensetzungen zur Aufbewahrung vor der Nutzung enthalten sind, wobei vorzugsweise auch ein Statikmischer zum entsprechenden Kit gehört.

Die Verwendung eines erfindungsgemäß verwendeten Befestigungsmörtels am gewünschten Einsatzort erfolgt durch Mischen der zugehörigen Komponenten, insbesondere nahe bei und/oder direkt vor einem Loch oder (beispielsweise insbesondere bei Verwendung von Kartuschen mit Statikmischern) direkt vor und/oder (insbesondere beim Zerstören entsprechender Patronen oder Ampullen) innerhalb eines Loches oder Spaltes, z.B. einem Bohrloch.

Unter "Einmörteln" ist insbesondere eine (stoff- und/oder formschlüssige) Befestigung von Verankerungsmitteln aus Metall (z.B. Hinterschneidanker, Gewindestangen, Schrauben, Bohranker, Bolzen) oder ferner aus einem anderen Material, wie Kunststoff oder Holz, in festen (vorzugsweise bereits als solche fertiggestellten) Substraten, wie Beton oder Mauerwerk, insbesondere, soweit sie Bestandteile von künstlich errichteten Bauwerken sind, vor allem Mauerwerk, Decken, Wände, Böden, Platten, Pfeilern oder dergleichen (z.B. aus Beton, Naturstein, Mauerwerk aus Vollsteinen oder Lochsteinen, ferner Kunststoff oder Holz), insbesondere in Löchern, wie Bohrlöchern, zu verstehen. Mittels dieser Verankerungsmittel können dann beispielsweise Geländer, Abdeckungselemente, wie Platten, Fassaden oder andere Bauelemente befestigt werden.

Wo von "Gemischen von zwei oder mehr davon" die Rede ist, beinhaltet dies insbesondere Gemische von mindesten einem der genannten Bestandteile, die als bevorzugt hervorgehoben sind, mit ein oder mehreren anderen, insbesondere ein oder mehreren ebenfalls als bevorzugt gekennzeichneten Komponenten.

"Als solche fertiggestellt" bedeutet insbesondere, dass die Substrate bis auf mögliche Oberflächenmodifikationen (wie Beschichtung, z.B. Verputzen oder Lackieren) oder dergleichen bereits fertiggestellt (z.B. als Bausteine oder Mauern) und nicht erst gleichzeitig mit dem erfindungsgemäß verwendeten Befestigungsmörtel fertiggestellt werden oder aus diesem bestehen. Mit anderen Worten: Der erfindungsgemäß verwendete Befestigungsmörtel ist vorzugsweise nicht selbst bereits fertiggestelltes Substrat.
Die Einbringung des oder der Verankerungsmittel(s) erfolgt vorzugsweise bereits kurze Zeit, vorzugsweise 30 Minuten oder weniger, nach dem Mischen der Komponenten des erfindungsgemäß verwendeten Befestigungsmörtels. Zur Erläuterung: Mit der Mischung und Einbringung der Komponenten auf oder in die gewünschten Stellen, an denen Verankerungsmittel befestigt werden sollen, insbesondere Löcher, wie Bohrlöcher, beginnen mehrere, im wesentlichen parallel und/oder nur mit geringer zeitlicher Versetzung ablaufende Reaktionen, insbesondere die Polyaddition: Die endgültige Aushärtung erfolgt *in situ.*
Spezifische Ausführungsformen der Erfindung betreffen auch:
Die Verwendung eines:
(a) Zwei- oder mehrkomponentiger Befestigungsmörtel zum Einmörteln von Verankerungsmitteln in Löcher oder Spalten, bei dem das Befestigungsmörtelsystem und ein Verankerungs-mittel in ein Loch oder einen Spalt eingebracht werden und das Befestigungsmörtelsystem zum Aushärten gebracht wird, dadurch gekennzeichnet, dass als Befestigungsmörtelsystem eines auf der Basis von (nach Start und unter Umsetzung mit einem Härter) härtenden Reaktivharzen auf Epoxidbasis verwendet wird, welches ein oder mehre Silane, die zur Teilnahme an der Polyreaktion mit einem härtbaren Reaktivharz auf Epoxidbasis, befähigte reaktive Gruppen aufweisen oder nicht und in jedem Falle Si-gebundene hydrolysierbare Gruppen aufweisen, beinhaltet, wobei "auf der Basis" bedeutet, dass die erfindungsgemäßen verwendeten Mörtelsysteme neben den genannten Komponenten auch weitere Inhaltsstoffe beinhalten können;
(b) Befestigungsmörtelsystems nach Absatz (a), welches als Silane ein oder mehrere keine oder mindestens eine Amino-, sek. Amino-, Mercapto-, Isocyanato-, Alkenyl-, (Meth)acryloyl-, Anhydrido- und/oder (insbesondere) Epoxy-Gruppe tragende, insbesondere Epoxy (besonders bevorzugt), Amino- und/oder Thiolgruppe beinhaltende, und mindestens eine Si-gebundene hydrolysierbare Gruppe beinhaltende Silane teilweise oder ausschließlich beinhaltet;
(c) Befestigungsmörtelsystems nach Absatz (a), welches als Silane teilweise oder ausschließlich solche der Formel I beinhaltet, wie oben definiert;
(d) Befestigungsmörtelsystems nach einem der Absätze (a) bis (c), *dadurch gekennzeichnet,* dass die Silane teilweise oder ausschließlich zur Teilnahme an der Polyreaktion mit einem härtbaren Reaktivharz auf Epoxidbasis und/oder einem dazu korrespondierenden Härter befähigte reaktive Gruppen aufweisen;
(e) Befestigungsmörtelsystems nach einem der Absätze (a) bis (d), *dadurch gekennzeichnet,* dass es als Silane teilweise oder ausschließlich solche der Formel II, wie oben definiert, beinhaltet;
(f) Befestigungsmörtelsystems nach Absatz (e), *dadurch gekennzeichnet,* dass es als Silane teilweise oder ausschließlich solche der Formel II beinhaltet, in denen Y Epoxyalkoxy (bevorzugt), R₁**-NH oder SH, wobei R₁** für Wasserstoff, Alkyl oder Aminoalkyl steht und die übrigen Symbole wie für Formel II definiert sind;
(g) Befestigungsmörtelsystems nach einem der Absätze (a) bis (f), *dadurch gekennzeichnet,* dass es als Silane teilweise oder ausschließlich solche der Formel III, wie oben definiert, beinhaltet;
(h) Befestigungsmörtelsystems nach einem der Absätze (a) bis (g), *dadurch gekennzeichnet,* dass in dem Befestigungsmörtelsystem als Si-gebundene hydrolysierbare Gruppen in den Silanen ein oder mehrere ausgewählt aus Halogen, Ketoximatgruppen, Amino, Aminoxy, Mercapto, Acyloxy, Aryloxy, Aralkyloxy (= Arylalkoxy) und insbesondere Alkyloxy (= Alkoxy) vorhanden sind;
(i) Befestigungsmörtelsystems nach einem der Absätze (a) bis (h), *dadurch gekennzeichnet,* dass es in einer Komponente Wasser beinhaltet (welches mit den hydrolysierbaren Gruppen der Silane und gegebenenfalls mit Zement oder anderen hydraulisch härtbaren Stoffen reagieren kann);
(j) Befestigungsmörtelsystems nach einem der Absätze (a) bis (i), *dadurch gekennzeichnet,* dass in dem Befestigungsmörtelsystem in der die härtbaren Reaktionsharze und die Silane beinhaltenden Komponente weitere hydraulisch härtbare Stoffe wie Zemente (z.B. Portlandzement oder Tonerdeschmelzzemente) beinhaltet sind;
(k) Befestigungsmörtelsystems nach einem der Absätze (a) bis (j), *dadurch gekennzeichnet,* dass in dem Befestigungsmörtelsystem als Silan 3-Aminopropyltrialkoxysilan, N-(Aminoalkyl)-3-aminopropyltrialkoxysilan, 3-Mercaptopropyltrialkoxysilan, Tetraethoxysilan, Bis-(3-trialkoxypropylsilylpropyl)amin, 3-(Meth)acryloyl-oxypropyltrialkoxysilan, Alkenyltrialkoxysilan, Tetraalkoxysilan oder (insbesondere) 3-Glycidyloxypropyltrialkoxysilan oder (ferner) Alkoxypolysilikat, oder Gemische von zwei oder mehr davon, beinhaltet sind;
(l) Befestigungsmörtelsystems nach einem der Absätze (a) bis (k), *dadurch gekennzeichnet,* dass in dem Befestigungsmörtelsystem als Silan teilweise oder nur 3-Aminopropyl-trimethoxysilan, N-(2-Aminoethyl)-3-aminopropyltrimethoxysilan, 3-Mercaptopropyltrimethoxysilan, Bis-(3-trimethoxysilylpropyl)amin, Vinyltrimethoxysilan, Vinyltriethoxysilan, oder Tetraethoxysilan, Tetramethoxysilan, Tetrapropoxysilan, oder (insbesondere) 3-Glycidyloxypropyltrimethoxysilan, (insbesondere) 3-Glycidyloxypropyltriethoxysilan, oder (ferner oder insbesondere) Ethyl- oder Propylpolysilikat; oder Gemische von zwei oder mehr davon, beinhaltet sind;
(m) Befestigungsmörtelsystems nach einem der Absätze (a) bis (I), *dadurch gekennzeichnet,* dass das oder die härtbaren Reaktivharz(e) auf Epoxidbasis als Epoxid Polyglycidylether von mindestens einem mehrwertigen Alkohol oder Phenol beinhaltet;
(n) Befestigungsmörtelsystems nach einem der Absätze (a) bis (m), *dadurch gekennzeichnet,* dass das oder die härtbaren (= in Gegenwart von Härter härtenden) Reaktivharz(e) auf Epoxidbasis als Epoxid Polyglycidylether von Novolak, Bisphenol F oder Bisphenol A, oder Gemische solcher Epoxide, beinhaltet, mit oder ohne einen reaktiven Verdünner, insbesondere Trimethylolpropantriglycidylether;
   - der Anteil an der Gesamtmasse der Reaktanden und Zusätze des erfindungsgemäß verwendeten Befestigungsmörtelsystems beträgt vorzugsweise 5 bis unter 100 Gew.-%, insbesondere 10 bis 80 Gew.-%, 10 bis 70 Gew.-% oder 10 bis 60 Gew.-%. Möglich sind auch Gemische von zwei oder mehr solcher Epoxid-Komponenten -
(o) Befestigungsmörtelsystems nach einem der Absätze (a) bis (n), *dadurch gekennzeichnet,* dass es als Härter solche mit zwei oder mehr Gruppen ausgewählt aus Amino, Imino, und Mercapto, beispielsweise entsprechende Amine oder Thiole, oder ferner Thioalkohole, Aminoalkohole oder Aminothiole, oder Gemische solcher Verbindungen, beinhaltet;
(p) Befestigungsmörtelsystem nach einem der Absätze (a) bis (o), *dadurch gekennzeichnet,* dass es sich um ein Zwei-Komponenten-System handelt, insbesondere in Form einer Zwei-Kammer-Kartusche ohne oder mit Statikmischer;
(q) Befestigungsmörtelsystems nach einem der Absätze (a) bis (p) zum Einmörteln von Verankerungsmitteln in Löcher oder Spalten, insbesondere in Bohrlöchern, wie feuchten Bohrlöchern, bei dem das Injektions-Kunstmörtelsystem und ein Verankerungsmittel in ein Loch oder einen Spalt (insbesondere in einem rissigen Substrat, wie rissigem Beton) eingebracht werden und das Befestigungsmörtelsystem zum Aushärten gebracht wird;
(r) Befestigungsmörtelsystems nach einem der Absätze (a) bis (q), *dadurch gekennzeichnet,* dass es als Silane solche mit einer Viskosität von 1 Pa ∗ s oder niedriger beinhaltet, gemessen mit einem Brookfield DV-III+-Viskosimeter mit Spindel 3 bei 10 Umdrehungen/Minute bei 23 °C;
(s) Befestigungsmörtelsystems nach einem der Absätze (a) bis (r), *dadurch gekennzeichnet,* dass das oder die Silane mittlere oder absolute Molekulargewichte von 600 oder kleiner haben;
   sowie
(t) Verfahren oder Methode zum Einmörteln von Verankerungselementen und Löchern oder Spalten, bei denen ein erfindungsgemäß verwendetes Befestigungsmörtelsystem nach einem der Absätze (a) bis (s) zum Einmörteln von Verankerungsmitteln verwendet wird, wobei das Befestigungsmörtelsystem und ein Verankerungsmittel in ein Loch oder einen Spalt (insbesondere in einem rissigen Substrat, wie rissigem Beton) eingebracht werden und das Befestigungsmörtelsystem zum Aushärten gebracht wird.
(u) Verwendung oder diese Verwendung beinhaltendes Verfahren, insbesondere nach Absatz (q) oder Absatz (t), eines erfindungsgemäß verwendeten Befestigungsmörtels nach einem der Absätze (a) bis (p) zum Einmörteln von Verankerungsmitteln, insbesondere z.B. von handelsüblichen Gewindestangen in der Zugzone, also im gerissenen oder ferner von Einreißen bedrohten oder insbesondere rissigem Beton.

Die nachfolgenden Beispiel dienen der Illustration der Erfindung, ohne ihren Umfang einzuschränken.

### Beispiel 1: Vergleichsbeispiel (ohne Silan-Zusatz):

Hier wird ein zweikomponentiges Injektions-Kunstmörtelsystem (mit der Bezeichnung FIS EM 390 S (fischerwerke GmbH & Co. KG, Waldachtal, Deutschland)), das folgende Zusammensetzung hat, verwendet:
Komponente A: Bisphenol-A/F-Epichlorhydrinharz mit durchschnittlichem Molekulargewicht ≤ 700, weißer Portlandzement, Trimethylolpropantriglycidylether, Phosphorsäureester, Komponente B: Mannichbase, m-Phenylenbis(methylamin), 2,4,6-Tris(dimethylaminomethyl)phenol, 4,4'-Isopropylendiphenol, Benzylalkohol, Portlandzement.

Die Komponenten werden mit einer handelsüblichen 2-Kammer-Kartusche mit Statikmischer analog den oben für unter Verwendung der Leitlinie von der "European Organisation for Technical Approvals" (EOTA) (2001): ETAG N° 001 Ausgabe November 2006, Leitlinie für die europäische technische Zulassung für Metalldübel zur Verankerung im Beton, Teil 5: Verbunddübel, Februar 2008, unter 5.1.2.1 (b) beschriebenen Bedingungen einem Adhäsionsversagenstest unterzogen und der Mittelwert der Adhäsionsversagenslast aus 5 Versuchen für M12 Bolzen bei einer Verankerungstiefe von 72 mm ermittelt.

### Beispiele 2 bis 4: Erfindungsgemäß verwendete Injektions-Kunstharzsysteme mit Silan-Zusatz

Dem in Beispiel 1 genannten Injektions-Kunstmörtelsystem wurde in Komponente (A) und/ oder (B), bezogen auf das Gesamtgewicht der jeweiligen Einzelkomponente, jeweils in einem Gewichtsanteil von 5 Gew.-% das in der nachfolgenden Tabelle genannte Silan zugesetzt, woraufhin die ebenfalls in der nachfolgenden Tabelle 1 genannten Adhäsionsversagenslasten gefunden wurden:

**Tabelle 1**

| Beispiel | Zusatz | Durchschnittliche Adhäsionsversagenslast [kN] | Änderung in % |
|---|---|---|---|
| Vergleichsbeispiel 1 | keiner | 80,1 | |
| Beispiel 2 | A: 5 % Glycidyloxypropyltrimethoxysilan | 91,8 | 14,1 |
| | B: 5 % Aminopropyltriethoxysilan | | |
| Beispiel 3 | A: 5 % Glycidyloxypropyltrimethoxysilan | 90,6 | 13,1 |
| Beispiel 4 | B: 10 % Aminopropyltriethoxysilan | 89,3 | 11,5 |

### Beispiele 5 - 9: Weitere erfindungsgemäß verwendete Befestigungsmörtel mit Silan-Zusatz:

Dem in Beispiel 1 genannten Injektions-Kunstmörtelsystem wurde in Komponente (A) und/ oder (B), bezogen auf das Gesamtgewicht der einzelnen Komponenten, jeweils das in der nachfolgenden Tabelle 2 genannte Silan zugesetzt:

**Tabelle 2**

| Beispiel | Zusatz |
|---|---|
| Beispiel 5 | A: 3 % 3-Glycidyloxymethyl-trimethoxysilan |
| Beispiel 6 | B: 6 % Aminoethylaminoethylaminopropyltrimethoxysilan |
| Beispiel 7 | A: 5 % 3-Acryloxypropyltrimethoxysilan |
| Beispiel 8 | B: 2 % 3-Mercaptopropyltrimethoxysilan |
| Beispiel 9 | A: 8 % Tetraethoxysilan |

### Beispiel 10: Erfindungsgemäß verwendeter Befestigungsmörtel mit Glycidyloxypropyltrimethoxysilan

Es wird ein Härter und ein Mörtel, wie in Beispiel 1 beschrieben, hergestellt. Im Unterschied zu Beispiel 1 wird der Anteil an Trimethylolpropantriglycidylether in der Mörtelformulierung durch Glycidyloxypropyltrimethoxysilan ersetzt.

### Beispiele 11 bis 18: Kartuschen mit Statikmischer und erfindungsgemäß verwendeten zweikomponentigen Befestigungsmörteln

Bei Zwei-Kammer-Kartuschen mit einem Gesamtinhalt von 390 ml und einem Mischungsverhältnis von Komponente A : Komponente B gleich 3:1 werden die beiden Kammern jeweils mit Komponente A und Komponente B jeweils eines der Befestigungsmörtel nach jeweils einem der Beispiele 2 bis 9 befüllt. Die Kartuschen werden verschlossen und gemeinsam mit einem entsprechenden Statikmischer verpackt zu Zwei-Komponenten-Kits. Prinzipiell sind hier auch Kombinationen von Silanen in A und B möglich, wie dies in Beispiel 2 gezeigt ist (also beispielsweise eine Kartusche hergestellt aus Beispiel 5 und 6).

### Beispiel 18: Risstauglichkeit im statischen und im dynamischen Linienriß:

Für eine Rezeptur entsprechend den Beispielen 1 und 2 wurde die Risstauglichkeit im statischen (Testkriterium nach ETAG 01 Part 5) und im dynamischen Linienriss (Testkriterium nach ETAG 01 Part 5) mit handelsüblichen Gewindestangen überprüft.

Es finden sich gegenüber der silanfreien Rezeptur gemäß Beispiel 1 deutliche Verbesserungen. Zwar erfüllen beide Rezepturen die erforderlichen Prüfkriterien der ETAG 01 Part 5 für Versuche im gerissenen Beton, das heißt, es werden sowohl im statischen als auch im dynamischen Linienriss die α_{req.} von 0,8 beziehungsweise 0,9 erreicht, bei Beispiel 2 jedoch überraschenderweise auf einem um 20 % höheren Lastniveau.

## Patentansprüche

1. Verwendung eines Befestigungsmörtelsystems zum Einmörteln von Verankerungsmitteln in Löcher oder Spalten, bei dem das Befestigungsmör¬tel¬system und ein Verankerungsmittel in ein Loch oder einen Spalt eingebracht werden und das Befestigungsmörtelsystem zum Aushärten gebracht wird, **dadurch gekennzeichnet, dass** als Befestigungsmörtelsystem eines auf der Basis von ein oder mehreren härtenden Reaktivharzen auf Epoxidbasis verwendet wird, welches ein oder mehrere Silane, die zur Teilnahme an der Polymerisierung mit einem Kunstharz auf Basis des oder der härtenden Reaktiv-Kunstharze auf Epoxidbasis befähigte reaktive Gruppen aufweisen oder nicht und in jedem Falle Si-gebundene hydrolysierbare Gruppen aufweisen, beinhaltet, wobei "auf der Basis" bedeutet, dass die erfindungsgemäßen Mörtel¬systeme neben den genannten Kompo¬nenten auch weitere Inhalts¬stoffe beinhalten können.

2. Verwendung eines Befestigungsmörtelsystem nach Anspruch 1, welches als Silane ein oder mehrere mindestens eine Amino-, sek. Amino-, Mercapto-, Isocyanato-, Alkenyl, (Meth)acryloyl-, Anhydrido- und/oder Epoxy-Gruppe tragende und mindestens eine Si-gebundene hydrolysierbare Gruppe beinhaltende Silane teilweise oder ausschließlich beinhaltet.

3. Verwendung eines Befestigungsmörtelsystems nach Anspruch 1, welches als Silane teilweise oder ausschließlich ein oder mehrere solche der Formel I beinhaltet,
[R₁-X-(CH₂)ₙ-]ₚ-Si(R^{B})_{q}(L)ₜ (I)
worin
X für S oder N R₁* oder O oder NCO oder nichts steht; wobei X nichts ist, wenn R₁ für Anhydrido steht;
R₁ und R1*, alle unabhängig voneinander, für nichts, Wasserstoff, Cycloalkyl, Alkyl, Aminoalkyl, (Meth)acryloyl, Aryl, Aralkyl, Acyl, Heterocyclyl, für einen Rest der Formel -[(CH₂)_{n*}]_{p*}-Si(R^{B*})_{3-t*}(L*)_{t*} oder für Epoxyalkyl stehen, worin, jeweils unabhängig vom anderen Rest, R^{B}* die nachfolgend für R^{B} genannten Bedeutungen, L* die nachfolgend für L genannten Bedeutungen und n*, p* und t* jeweils die nachfolgend genannten Bedeutungen haben; wobei R₁ Wasserstoff ist, wenn X für S steht; wobei X für O steht wenn R₁ Epoxyalkyl oder (Meth)acryloyl ist; wobei R₁ nichts ist, wenn X für NCO (= Isocyanato) steht;
R^{B} unabhängig voneinander für eine Alkyl-, Arylalkyl- oder Arylgruppe steht, vorzugsweise für Alkyl und/oder Alkenyl,
L für einen hydrolysierbaren Rest, insbesondere Alkoxy, steht,
n und, falls vorhanden, n* unabhängig voneinander für eine positive ganze Zahl, insbesondere 1 bis 10, stehen;
p für 0 bis 3 steht und, falls vorhanden, p* unabhängig für 1 bis 3 steht;
q für 0 bis 2 steht; und
t für 1 bis 4 steht und, falls vorhanden, t* unabhängig für 1 bis 3 steht,
mit der Maßgabe, dass gilt: p + q + t = 4 und, falls vorhanden, p* + (3-t*) + t* = 4.

4. Verwendung eines Befestigungsmörtelsystems nach einem der Ansprüche 1 bis 3, ***dadurch gekennzeichnet,* dass** die ein oder mehreren Silane teilweise oder ausschließlich zur Teilnahme an der Polymerisierung mit ein oder mehreren härtenden Reaktiv-Kunstharzen auf Epoxidbasis befähigte reaktive Gruppen aufweisen.

5. Verwendung eines Befestigungsmörtelsystems nach einem der Ansprüche 1 bis 4, ***dadurch gekennzeichnet,* dass** das Befestigungsmörtelsystem als ein oder mehrere Silane teilweise oder ausschließlich solche der Formel II,
[Y-(CH₂)ₐ-]-Si(R^{B})₃₋ₜ(L)ₜ (II)
worin
Y für Epoxyalkoxy, R₁**-NH oder SH, wobei R₁** für Wasserstoff, Alkyl oder Aminoalkyl steht,
R^{B} unabhängig voneinander für eine Alkyl-, Alkenyl- Arylalkyl- oder Arylgruppe steht, vorzugsweise für Alkyl und/oder Alkenyl,
L für einen hydrolysierbaren Rest, insbesondere Alkoxy, steht,
a für eine positive ganze Zahl, insbesondere 1 bis 10, vor allem 1 bis 3, steht; und
t für 1 bis 3 steht, beinhaltet.

6. Verwendung eines Befestigungsmörtelsystems nach Anspruch 5, welches als ein oder mehrere Silane teilweise oder ausschließlich solche der Formel II beinhaltet, in denen Y für Epoxyalkoxy steht und die übrigen Symbole wie in Anspruch 5 definiert sind.

7. Verwendung eines Befestigungsmörtelsystems nach einem der Ansprüche 1 bis 6, welches als ein oder mehrere Silane teilweise oder ausschließlich solche der Formel III beinhaltet,
Si(R^{B})₄₋ₜ(L)ₜ (III)
worin R^{B} unabhängig voneinander für eine Alkyl-, Alkenyl-, Arylalkyl- oder Arylgruppe steht, vorzugsweise für Alkyl und/oder Alkenyl,
L für einen hydrolysierbaren Rest, insbesondere Alkoxy, steht,
und
t für 1 bis 4 steht.

8. Verwendung eines Befestigungsmörtelsystems nach einem der Ansprüche 1 bis 7, ***dadurch gekennzeichnet,* dass** in dem Befestigungsmörtelsystem als Si-gebundene hydrolysierbare Gruppen in den ein oder mehreren Silanen ein oder mehrere ausgewählt aus Halogen, Ketoximatgruppen, Amino, Aminoxy, Mercapto, Acyloxy, Aryloxy, Aralkyloxy und insbesondere Alkyloxy vorhanden sind.

9. Verwendung eines Befestigungsmörtelsystems nach einem der Ansprüche 1 bis 8, ***dadurch gekennzeichnet,* dass** in dem Befestigungsmörtelsystem als Silan 3-Aminopropyltrialkoxysilan, N-(Aminoalkyl)-3-aminopropyltrimethoxysilan, 3-Mercaptopropyltrialkoxysilan, Tetraalkoxysilan, Bis-(3-trialkoxysilylpropyl)amin, 3-(Meth)acryloyl-oxypropyltrialkoxysilan, Alkenyltrialkoxysilan, Tetraalkoxysilan, 3-Glycidyloxypropyltrialkoxysilan oder Alkoxypolysilikat, oder Gemische von zwei oder mehr davon, beinhaltet sind.

10. Verwendung eines Befestigungsmörtelsystems nach einem der Ansprüche 1 bis 9, ***dadurch gekennzeichnet,* dass** in dem Befestigungsmörtelsystem als Silan teilweise oder nur 3-Aminopropyl-trimethoxysilan, N-(2-Aminoethyl)-3-aminopropyltrimethoxysilan, 3-Mercaptopropyltrimethoxysilan, Vinyltrimethoxysilan, Vinyltriethoxysilan, Tetraethoxysilan, Tetramethoxysilan, Tetrapropoxysilan, 3-Glycidyloxypropyltrimethoxysilan, Bis-(3-trimethoxysilylpropyl)amin oder Ethyl- oder Propylpolysilikat, oder Gemische von zwei oder mehr davon, beinhaltet sind.

11. Verwendung eines Befestigungsmörtelsystems nach einem der Ansprüche 1 bis 10, ***dadurch gekennzeichnet,* dass** in dem Befestigungsmörtelsystem das oder die härtende(n) Reaktiv-Kunstharz(e) auf Epoxidbasis als Epoxid Polyglycidylether von mindestens einem mehrwertigen Alkohol oder Phenol beinhaltet.

12. Verwendung eines Befestigungsmörtelsystems nach einem der Ansprüche 1 bis 11, ***dadurch gekennzeichnet,* dass** in dem Befestigungsmörtelsystem das oder die härtende(n) Reaktivharz(e) auf Epoxidbasis als Epoxid Polyglycidylether von Novolak, Bisphenol F oder Bisphenol A, oder Gemische solcher Epoxide, beinhaltet, mit oder ohne einen reaktiven Verdünner, insbesondere Trimethylolpropantriglycidylether.

13. Verwendung eines Befestigungsmörtelsystems nach einem der Ansprüche 1 bis 12, ***dadurch gekennzeichnet,* dass** es in dem Befestigungsmörtelsystem als Härter solche mit zwei oder mehr Gruppen ausgewählt aus Amino, Imino, und Mercapto, oder Gemische solcher Verbindungen, beinhaltet.

14. Verwendung eines Befestigungsmörtelsystems nach einem der Ansprüche 1 bis 13, ***dadurch gekennzeichnet,* dass** es sich bei dem Befestigungsmörtelsystem um ein Zwei-Komponenten-System in Form einer Zwei-Kammer-Kartusche ohne oder mit Statikmischer handelt

15. Verwendung eines Befestigungsmörtelsystems nach einem der Ansprüche 1 bis 14, ***dadurch gekennzeichnet,* dass** es als Silane solche mit einer Viskosität von 1 Pa ∗ s oder niedriger beinhaltet, gemessen mit einem Brookfield DV-III+-Viskosimeter mit Spindel 3 bei 10 Umdrehungen/Minute bei 23 °C.

16. Verwendung eines Befestigungsmörtelsystems nach einem der Ansprüche 1 bis 15, ***dadurch gekennzeichnet,* dass** das oder die Silane mittlere oder absolute Molekulargewichte von 600 oder kleiner haben.

17. Verfahren oder Methode zum Einmörteln von Verankerungselementen und Löchern oder Spalten, bei denen ein Befestigungsmörtelsystem wie in einem der Ansprüche 1 bis 16 erwähnt zum Einmörteln von Verankerungsmitteln verwendet wird, wobei das Befestigungsmörtelsystem und ein Verankerungsmittel in ein Loch oder einen Spalt eingebracht werden und das Kunstmörtelsystem zum Aushärten gebracht wird.

## Claims

1. Use of a fixing mortar system for embedding anchoring means in mortar in holes or crevices, wherein the fixing mortar system and an anchoring means are introduced into a hole or crevice and the fixing mortar system is caused to cure, **characterised in that** as fixing mortar system there is used one based on one or more hardening epoxy-based reactive resins which includes one or more silanes which may or may not have reactive groups capable of participating in the polymerisation with a synthetic resin based on the hardening epoxy-based reactive synthetic resin(s) but which in any case have Si-bonded hydrolysable groups, wherein "based on" means that the mortar systems according to the invention, in addition to the mentioned components, may also include further ingredients.

2. Use of a fixing mortar system according to claim 1, which includes partly or solely as silanes one or more silanes that carry at least one amino, sec-amino, mercapto, isocyanato, alkenyl, (meth)acryloyl, anhydrido and/or epoxy group(s) and include at least one Si-bonded hydrolysable group.

3. Use of a fixing mortar system according to claim 1, which includes as silanes partly or solely one or more of those of formula I
[R₁-X-(CH₂)ₙ-]ₚ-Si(R^{B})_{q}(L)ₜ (I),
wherein
X denotes S or NR₁* or O or NCO or nothing; with X being nothing when R₁ denotes anhydrido;
R₁ and R₁*, all independently of one another, denote nothing, hydrogen, cycloalkyl, alkyl, aminoalkyl, (meth)acryloyl, aryl, aralkyl, acyl, heterocyclyl, a radical of the formula -[(CH₂)_{n*}]_{p*}-Si(R^{B*})_{3-t*}(L*)_{t*} or epoxyalkyl, wherein, in each case independently of the other radical, R^{B}* is as defined below for R^{B}, L* is as defined below for L and n*, p* and t* are in each case as defined below; with R₁ being hydrogen when X denotes S; with X being O when R₁ is epoxyalkyl or (meth)acryloyl; with R₁ being nothing when X denotes NCO (= isocyanato);
R^{B}, independently of any other, denotes an alkyl, arylalkyl or aryl group, preferably alkyl and/or alkenyl,
L denotes a hydrolysable radical, especially alkoxy,
n and, if present, n* independently of one another denote a positive integer, especially from 1 to 10;
p denotes from 0 to 3 and, if present, p* independently denotes from 1 to 3;
q denotes from 0 to 2; and
t denotes from 1 to 4 and, if present, t* independently denotes from 1 to 3,
with the proviso that p + q + t = 4 and, if present, p* + (3-t*) + t* = 4.

4. Use of a fixing mortar system according to any one of claims 1 to 3, ***characterised in that*** the one or more silanes have partly or solely reactive groups capable of participating in the polymerisation with one or more hardening epoxy-based reactive synthetic resins.

5. Use of a fixing mortar system according to any one of claims 1 to 4, ***characterised in that*** the fixing mortar system includes as one or more silanes partly or solely those of formula II
[Y-(CH₂)ₐ-]-Si(R^{B})₃₋ₜ(L)ₜ (II),
wherein
Y denotes epoxyalkoxy, R₁**-NH or SH, wherein R₁** denotes hydrogen, alkyl or aminoalkyl,
R^{B} denotes, independently of any other, an alkyl, alkenyl, arylalkyl or aryl group, preferably alkyl and/or alkenyl,
L denotes a hydrolysable radical, especially alkoxy,
a denotes a positive integer, especially from 1 to 10, more especially from 1 to 3; and
t denotes from 1 to 3.

6. Use of a fixing mortar system according to claim 5, which includes as one or more silanes partly or solely those of formula II wherein Y denotes epoxyalkoxy and the other symbols are as defined in claim 5.

7. Use of a fixing mortar system according to any one of claims 1 to 6, which includes as one or more silanes partly or solely those of formula III
Si(R^{B})₄₋ₜ(L)ₜ (III),
wherein R^{B} denotes, independently of any other(s), an alkyl, alkenyl, arylalkyl or aryl group, preferably alkyl and/or alkenyl,
L denotes a hydrolysable radical, especially alkoxy,
and
t denotes from 1 to 4.

8. Use of a fixing mortar system according to any one of claims 1 to 7, ***characterised in that**,* in the fixing mortar system, as Si-bonded hydrolysable groups in the one or more silanes there are present one or more selected from halogen, ketoximate groups, amino, aminoxy, mercapto, acyloxy, aryloxy, aralkyloxy and especially alkyloxy.

9. Use of a fixing mortar system according to any one of claims 1 to 8, ***characterised in that**,* in the fixing mortar system, as silane there are included 3-aminopropyl-trialkoxysilane, N-(aminoalkyl)-3-aminopropyl-trimethoxysilane, 3-mercaptopropyl-tri-alkoxysilane, tetraalkoxysilane, bis(3-trialkoxysilylpropyl)amine, 3-(meth)acryloyl-oxy-propyl-trialkoxysilane, alkenyl-trialkoxysilane, tetraalkoxysilane, 3-glycidyloxypropyl-trialkoxysilane or alkoxypolysilicate, or mixtures of two or more thereof.

10. Use of a fixing mortar system according to any one of claims 1 to 9, ***characterised in that**,* in the fixing mortar system, as silane there are included partly or only 3-aminopropyl-trimethoxysilane, N-(2-aminoethyl)-3-aminopropyl-trimethoxysilane, 3-mercaptopropyl-trimethoxysilane, vinyltrimethoxysilane, vinyltriethoxysilane, tetraethoxysilane, tetramethoxysilane, tetrapropoxysilane, 3-glycidyloxypropyl-trimethoxysilane, bis(3-trimethoxysilylpropyl)amine, or ethyl or propyl polysilicate, or mixtures of two or more thereof.

11. Use of a fixing mortar system according to any one of claims 1 to 10, ***characterised in that**,* in the fixing mortar system, the hardening epoxy-based reactive synthetic resin(s) include(s) as epoxide polyglycidyl ethers of at least one polyvalent alcohol or phenol.

12. Use of a fixing mortar system according to any one of claims 1 to 11, ***characterised in that**,* in the fixing mortar system, the hardening epoxy-based reactive resin(s) include(s) as epoxide polyglycidyl ethers of novolak, bisphenol F or bisphenol A, or mixtures of such epoxides, with or without a reactive diluent, especially trimethylolpropane triglycidyl ether.

13. Use of a fixing mortar system according to any one of claims 1 to 12, ***characterised in that**,* in the fixing mortar system, it includes as hardener those having two or more groups selected from amino, imino and mercapto, or mixtures of such compounds.

14. Use of a fixing mortar system according to any one of claims 1 to 13, ***characterised in that*** the fixing mortar system is a two-component system in the form of a two-chamber cartridge without or with a static mixer.

15. Use of a fixing mortar system according to any one of claims 1 to 14, ***characterised in that*** it includes as silanes those having a viscosity of 1 Pa * s or lower, measured using a Brookfield DV-III+ viscometer with spindle 3 at 10 revolutions/minute at 23°C.

16. Use of a fixing mortar system according to any one of claims 1 to 15, ***characterised in that*** the silane(s) have average or absolute molecular weights of 600 or less.

17. Process or method for embedding anchoring elements in mortar in holes or crevices, in which a fixing mortar system as mentioned in any one of claims 1 to 16 is used for embedding anchoring means in mortar, the fixing mortar system and an anchoring means being introduced into a hole or crevice and the synthetic mortar system being caused to cure.

## Revendications

1. Utilisation d'un système de mortier de fixation pour sceller dans le mortier des moyens d'ancrage dans des trous ou des fentes, selon laquelle le système de mortier de fixation et un moyen d'ancrage sont introduits dans un trou ou une fente, et le système de mortier de fixation est amené à durcir, **caractérisée en ce qu'**en tant que système de mortier de fixation, un à base d'une ou de plusieurs résines réactives durcissantes à base d'époxyde est utilisé, qui contient un ou plusieurs silanes qui comprennent ou non des groupes réactifs aptes à participer à la polymérisation avec une résine synthétique à base de la ou des résines synthétiques réactives durcissantes à base d'époxyde, et comprennent dans chaque cas des groupes hydrolysables reliés au Si, « à base de » signifiant que les systèmes de mortier selon l'invention peuvent également contenir d'autres constituants en plus des composants indiqués.

2. Utilisation d'un système de mortier de fixation selon la revendication 1, qui contient partiellement ou exclusivement en tant que silanes un ou plusieurs silanes portant au moins un groupe amino, sec.-amino, mercapto, isocyanato, alcényle, (méth)acryloyle, anhydrido et/ou époxy et contenant au moins un groupe hydrolysable relié au Si.

3. Utilisation d'un système de mortier de fixation selon la revendication 1, qui contient partiellement ou exclusivement en tant que silanes un ou plusieurs de formule I :
[R₁-X-(CH₂)ₙ-]ₚ-Si(R^{B})_{q}(L)ₜ (I)
dans laquelle
X représente S ou NR₁* ou O ou NCO ou rien ; X ne représentant rien lorsque R₁ représente anhydrido ;
R₁ et R₁* représentent tous indépendamment l'un de l'autre, rien, l'hydrogène, un groupement cycloalkyle, alkyle, aminoalkyle, (méth)acryloyle, aryle, aralkyle, acyle, hétérocyclyle, un radical de formule -[(CH₂)_{n*}]_{p*}-Si(R^{B*})₃-t_{*}(L*)_{t*} ou époxyalkyle, R^{B*} ayant à chaque fois indépendamment de l'autre radical les significations indiquées ci-après pour R^{B}, L* ayant les significations indiquées ci-après pour L, et n*, p* et t* ayant chacun les significations indiquées ci-après ; R₁ représentant l'hydrogène lorsque X représente S ; X représentant O lorsque R₁ représente époxyalkyle ou (méth)acryloyle ; R₁ ne représentant rien lorsque X représente NCO (-isocyanato) ;
les R^{B} représentent indépendamment les uns des autres alkyle, arylalkyle ou aryle, de préférence alkyle et/ou alcényle,
L représente un radical hydrolysable, notamment alcoxy, n et, s'il est présent, n* représentent indépendamment l'un de l'autre un nombre entier positif, notamment de 1 à 10 ;
p représente 0 à 3 et, s'il est présent, p* représente indépendamment 1 à 3 ;
q représente 0 à 2 ; et
t représente 1 à 4 et, s'il est présent, t* représente indépendamment 1 à 3,
à condition que : p + q + t = 4 et, s'ils sont présents, p* + (3-t*) + t* = 4.

4. Utilisation d'un système de mortier de fixation selon l'une quelconque des revendications 1 à 3, **caractérisée en ce que** le ou les silanes comprennent partiellement ou exclusivement des groupes réactifs aptes à participer à la polymérisation avec une ou plusieurs résines synthétiques réactives durcissantes à base d'époxyde.

5. Utilisation d'un système de mortier de fixation selon l'une quelconque des revendications 1 à 4, **caractérisée en ce que** le système de mortier de fixation contient partiellement ou exclusivement en tant qu'un ou plusieurs silanes ceux de formule II :
[Y-(CH₂)ₐ-]-Si(R^{B})₃₋ₜ(L)ₜ (II)
dans laquelle
Y représente époxyalcoxy, R₁**-NH ou SH, R₁** représentant hydrogène, alkyle ou aminoalkyle,
les R^{B} représentent indépendamment les uns des autres un groupe alkyle, alcényle, arylalkyle ou aryle, de préférence alkyle et/ou alcényle,
L représente un radical hydrolysable, notamment alcoxy, a représente un nombre entier positif, notamment 1 à 10, avant tout 1 à 3 ; et
t représente 1 à 3.

6. Utilisation d'un système de mortier de fixation selon la revendication 5, qui contient partiellement ou exclusivement en tant qu'un ou plusieurs silanes ceux de formule II, dans laquelle Y représente époxyalcoxy et les autres symboles sont tels que définis dans la revendication 5.

7. Utilisation d'un système de mortier de fixation selon l'une quelconque des revendications 1 à 6, qui contient partiellement ou exclusivement en tant qu'un ou plusieurs silanes ceux de formule III :
Si(R^{B})₄₋ₜ(L)ₜ (III)
dans laquelle les R^{B} représentent indépendamment les uns des autres un groupe alkyle, alcényle, arylalkyle ou aryle, de préférence alkyle et/ou alcényle,
L représente un radical hydrolysable, notamment alcoxy, et
t représente 1 à 4.

8. Utilisation d'un système de mortier de fixation selon l'une quelconque des revendications 1 à 7, **caractérisée en ce que**, dans le système de mortier de fixation, en tant que groupes hydrolysables reliés au Si dans le ou les silanes, un ou plusieurs choisis parmi halogène, les groupes cétoximate, amino, aminoxy, mercapto, acyloxy, aryloxy, aralkyloxy et notamment alkyloxy sont présents.

9. Utilisation d'un système de mortier de fixation selon l'une quelconque des revendications 1 à 8, **caractérisée en ce que**, dans le système de mortier de fixation, en tant que silane, le 3-amincpropyltri-alcoxysilane, le N-(aminoalkyl)-3-aminopropyltriméthoxysilane, le 3-mercaptopropyltrialcoxysilane, le tétraalcoxysilane, la bis-(3-trialcoxysilylpropyl)aminé, le 3-(méth)acryloyl-oxypropyltrialcoxysilane, l'alcényltrialcoxysilane, le tétraalcoxysilane, le 3-glycidyloxypropyltrialcoxysilane ou l'alcoxypolysilicate, ou des mélanges de deux ou plus d'entre eux, sont contenus.

10. Utilisation d'un système de mortier de fixation selon l'une quelconque des revendications 1 à 9, **caractérisée en ce que**, dans le système de mortier de fixation, en tant que silane, le 3-aminopropyltriméthoxysilane, le N-(2-aminoéthyl)-3-aminopropyltriméthoxysilane, le 3-mercaptopropyltriméthoxysilane, le vinyltriméthoxysilane, le vinyltriéthoxysilane, le tétraétnoxysilane, le tétraméthoxysilane, le tétrapropoxysilane, le 3-glycidyloxypropyltriméthoxysilane, la bis-(3-triméthoxysily(propyl)amine ou l'éthyl- ou le propylpolysilicate, ou des mélanges de deux ou plus d'entre eux, sont contenus partiellement ou exclusivement.

11. Utilisation d'un système de mortier de fixation selon l'une quelconque des revendications 1 à 10, **caractérisée en ce que**, dans le système de mortier de fixation, la ou les résines synthétiques réactives durcissantes à base d'époxyde contiennent en tant qu'époxyde de l'éther polyglycidylique d'au moins un alcool polyvalent ou de phénol.

12. Utilisation d'un système de mortier de fixation selon l'une quelconque des revendications 1 à 11, **caractérisée en ce que**, dans le système de mortier de fixation, la ou les résines réactives durcissantes à base d'époxyde contiennent en tant qu'époxyde de l'éther polyglycidylique de novolaque, de bisphénol F ou de bisphénol A, ou des mélanges de tels époxydes, avec ou sans diluant réactif, notamment l'éther triglycidylique de triméthylolpropane.

13. Utilisation d'un système de mortier de fixation selon l'une quelconque des revendications 1 à 12, **caractérisée en ce qu'**il contient dans le système de mortier de fixation en tant que durcisseur, des durcisseurs contenant deux groupes ou plus choisis parmi amino, imino et mercapto ou des mélanges de tels composés.

14. Utilisation d'un système de mortier de fixation selon l'une quelconque des revendications 1 à 13, **caractérisée en ce que** le système de mortier de fixation consiste en un système bicomposant sous la forme d'une cartouche à deux chambres avec ou sans mélangeur statique.

15. Utilisation d'un système de mortier de fixation selon l'une quelconque des revendications 1 à 14, **caractérisée en ce qu'**il contient en tant que silanes des silanes ayant une viscosité de 1 Pa*s ou moins, mesurée avec un viscosimètre Brookfield DV-III+ avec le fuseau 3 à 10 tours/minute à 23 °C.

16. Utilisation d'un système de mortier de fixation selon l'une quelconque des revendications 1 à 15, **caractérisée en ce que** le ou les silanes ont des poids moléculaires moyens ou absolus de 600 ou moins.

17. Procédé ou méthode pour sceller dans le mortier des éléments d'ancrage et des trous ou des fentes, selon lequel ou selon laquelle un système de mortier de fixation tel que mentionné dans l'une quelconque des revendications 1 à 16 est utilisé pour sceller dans le mortier des éléments d'ancrage, le système de mortier de fixation et un moyen d'ancrage étant introduits dans un trou ou une fente et le système de mortier synthétique étant amené à durcir.
